# EUROPEAN PATENT APPLICATION

(11) **EP 1 267 266 A1**
(43) Date of publication of application: **18.12.2002**
(21) Application number: 01906213.2
(22) Date of filing: 22.02.2001
(51) Int. Cl.: G06F 12/00, G11B 27/00

(54) **FILE CONTROL METHOD**

(30) Priority: 28.02.2000 JP 2000050428
(71) Applicant: Sharp Kabushiki Kaisha, Osaka-shi, Osaka 545-8522 (JP)
(72) Inventor: IWANO, Yuri, Chiba-shi, Chiba 266-0005 (JP); IKEDA, Natsuko, Chiba-shi, Chiba 262-0033 (JP); KIYAMA, Jiro, Funabashi-shi, Chiba 274-0825 (JP); NISHIMURA, Motohide, Kitakyusyu-shi, Fukuoka 807-0844 (JP); YAMAMURA, Hiroyuki, Chiba-shi, Chiba 266-0011 (JP); YAMAGUCHI, Takayoshi, Nagareyama-shi, Chiba 270-0120 (JP)
(74) Representative: Müller, Frithjof E., Dipl.-Ing.
(86) International application number: JP0101309
(87) International publication number: WO01063419

(57) **Abstract**

When one recording medium is accessed from a multiple number of applications, the medium is usually divided into multiple areas. If this area division is performed and managed by the partitioning, it is difficult to change the partitions in size. Therefore, there has been the problem that the recording medium can not be used effectively. The recording medium is divided into multiple areas, and for each area, a dummy data is written into the blank space in the area so that dummy data can only be overwritten using a particular application or with a file of a particular type. This configuration makes it easy to divide the medium into multiple areas and change the areas in size.

## Description

### Technical Field

The present invention relates to a file management method whereby a single recording medium is divided into a plurality of areas when files of different applications should be written into the recording medium.

### Background Art

It provides a marked advantage for users if there are multipurpose disk media which can be used in common based on different platforms such as for PC usage, AV usage. For example, if a disk recorded with an AV disk recorder is accessible from a disk drive connected to a PC and if the reversal access can be made easily, this implies that the AV data recorded by an AV disk recorder can be accessed or edited from a PC and the edited product etc., can be readily reproduced by the AV disk recorder and the like. Further, a single disk may be used in common by AV usage and PC usage such that AV data may be recorded and application software for PCs may be stored into the single disk.

However, there are differences in characteristics between the data recorded for AV usage and that for PC usage. For example, when AV data recorded on a disk is reproduced, the AV data needs to be read out from the disk and displayed on the display at determined timing. If the data cannot be reproduced at the determined timing, this means that the pictures of the reproduced view become discontinuous, resulting in disorder, which is unacceptable.

Because disk media are advantageous in random accessibility, it is not necessary to arrange even a series of data in continuous locations on the disk but the data may be recorded in parts by making effective use of blank spaces on the disk. For example, for PC usage, if a document data file has been recorded at scattered locations on the disk, seeks or track jumps occur during reading the file at the positions where the data is disconnected, and in this while data reading from the disk is stopped. However, there will not occur any problem at all with regards to the function aspect, even though this configuration needs somehow a longer time for data reading, compared to the case where the data can be read out continuously.

However, for AV usage, as stated above, if the data to be reproduced is discontinuous on the disk, interruptions occur during data reading at the disconnected positions, possibly causing problems. In general, AV data read out from a disk is once stored in a buffer memory to some extent, so as to prevent interruption in the reproducing pictures by compensating for disconnections occurring during data reading, such as seeks, track jumps etc., with the data stored in the buffer memory. Though the buffer memory absorbs such disconnections of reproduced pictures, it will not be able to catch up with if seeks or track jumps occur so often. Therefore, when AV data is recorded on the disk, continuous recording of data free from occurrences of seeks and track jumps which will cause disconnections during data reading is preferred.

Now, if it is contemplated that one single disk is used in common for AV usage and PC usage, each type of data is desirably recorded to an area different from that of the other. If data for PC usage which is much smaller in data amount than AV data becomes recorded at random in the disk area where AV data which needs to be recorded continuously has been recorded, this will obstruct continuous recording of the AV data, may cause difficulties in recording and reproduction of AV data in some cases.

The data to be recorded for AV usage not only includes AV data but also contains various kinds of data such as management information files for reproducing the AV data and still images. Since the data to be recorded may be for the same usage but different in type, there occurs the demand for managing the data in separated areas dependent on the types of data to be recorded. Can be mentioned as examples the area where management information of the logical filesystem is recorded, the area where management information and the like for reproducing AV data is recorded, the area where AV data itself is recorded and the area where still images are recorded.

In order to use one single disk by dividing it into plural areas, there have been methods as follows. First, in a sense of dividing the area clearly, there exists the partitioning function based on the logical filesystem. For example, by defining partitions for AV usage and PC usage, it is possible to provide a dedicated area for each.

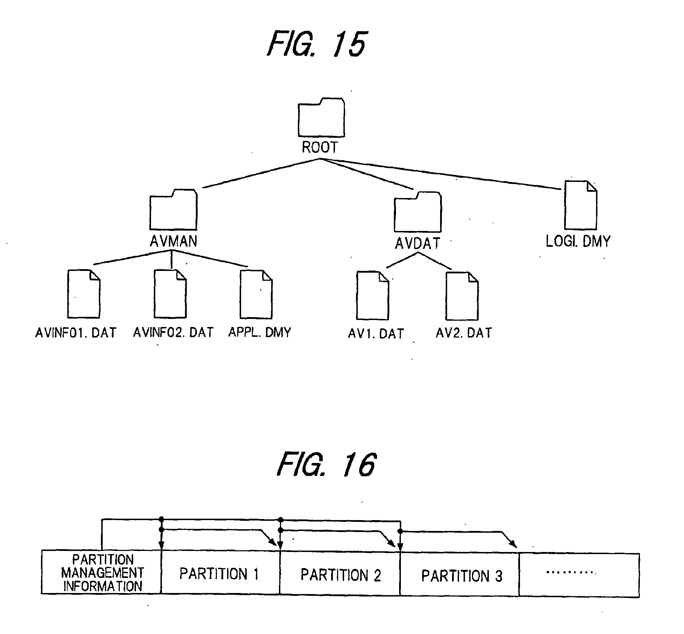

The example shown in Fig.16 illustrates the way one disk. is divided into three partitions, namely partition 1, partition 2 and partition 3.

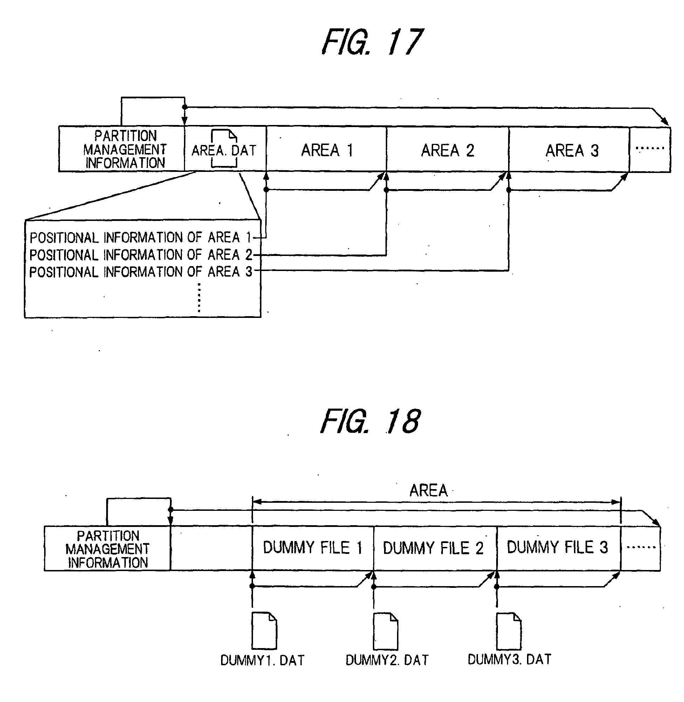

As a second method where the partitioning function is not used, it is possible to consider that the areas are managed as the management information in the application layer at ''the implementation level, instead of letting the logical filesystem manage the areas for AV usage and PC usage. For example, a management information file in which positional information of areas is recorded is recorded on the disk so that the positional information of each area can be grasped by reading the file. In the example shown in Fig.17, a file 'AREA.DAT' has positional information as to area 1, area 2 and area 3 recorded therein. Therefore, applications capable of understanding the file 'AREA.DAT' alone can grasp the ranges of the areas.

Differing from the above first method, areas 1 through 3 here belong to a single partition on the logical filesystem, and are sectioned therein.

A third method can be considered in which, for the purpose of reserving an area for recording a file or data, a dummy file is created as if the area were used despite no actual data being recorded. In the area shown in Fig.18, areas to be used for files to be recorded are secured by three dummy files, DUMMY1.DAT, DUMMY2.DAT and DUMMY3.DAT.

In this way, dummy data equal in size to the data to be recorded has been recorded beforehand and when a file of the predetermined data type is written in, the dummy data is erased and then the file is written in place, thus enabling continuous writing of files of different data types.

In the above first method, it is possible to create dedicated divided areas for AV usage and PC usage by using the partitioning function. However, in general, for partitioning, it is necessary to decide the number of partitions and their sizes when the disk is initialized. Hence, it is not easy to change the configuration of the partitions during use. This is because every partition usually has independent logical addresses and management information for blank spaces and hence it is necessary to reconstruct many pieces of management information if the configuration need to be changed. Further, the user needs to decide the size allotted for AV usage and that for PC usage at the time of initialization. However, it may happen that either one become lacked as use proceeds.

As stated above, since the sizes etc., of partitions are not easy to change, if, for example, there are blank spaces in the area for PC usage, it is no longer possible to record AV data when the area for AV usage has become full, thus posing the problem of the disk being unable to be used efficiently. Further, there are cases where a plurality of areas are needed to manage even the same type of data for AV usage, such as an area for recording the management information of the logical filesystem, area for recording the management information for reproducing AV data, area for recording AV data, and area for recording still images. In this case, if each area is managed as a partition, many partitions need to be formed. Therefore, when one partition becomes full, the possibility of more data, etc., being unable to be recorded becomes higher even with blank spaces still remaining on the disk.

As in the second method, when the areas are managed based on the management information in the application layer at the implementation level, instead of managing with the partitioning function provided by the logical filesystem, the areas are controlled by a specific application. Therefore, the management information with the positional data of the areas recorded therein is of no use for applications other than the specific one. No problem will occur as long as the disk is used only by the specified application. These areas cannot be recognized when accessed from an application other than the specified one since the secured areas are not. established at the logical filesystem level. Therefore, there is a possibility of unexpected data being written in the secured area, posing a problem.

Further, as in the third method, it is possible to secure an area by using a dummy file for reserving an area for allowing one file or data to be recorded. In this method, if, for example, a continuous area for recording management information needs to be secured, the sizes and number of files to be recorded in the future must be predicted, whereby dummy equal in size and in number should be recorded to secure the area. Therefore, dummy files are primarily prepared with the maximum size of expected files to be recorded. When an actually written file is smaller in size than the dummy file, there occurs the problem that much space is used wastefully.

In the area 1 shown in Fig.18, when it is assumed that the size of each file to be written in is 1 M Byte, dummy files having a size of 1 M byte will be formed. When a file of 0.8 M Byte is written in, the data of 0.8 M Byte is written first into the location of the first dummy file (DUMMY1.DAT). When a second file of 0.9 M Byte is written in, the data is written into the location of the second dummy file (DUMMY2.DAT). This results in a waste of 0.1 M Byte. Further, there is a problem that a file cannot be handled if the size of the file to be written in cannot be estimated (the maximum size cannot be expected).

It is therefore an object of the present invention to solve the problems with the above three methods, and the present invention prevents data other than the desired data from being written into the predetermined area, without sectioning using partitions based on the logical filesystem.

### Disclosure of Invention

The first aspect of the present invention resides in a file management method for a recording device having a recording medium and a recording control means for managing data input and output with resect to the recording medium, wherein at least one area is secured in the recording medium and the blank space in each area is managed by a dummy file, the method characterized in that, when a file is written into the area, the file is written over the dummy file in the area. and the size of the dummy file is updated to the size of the blank space in the area.

The second aspect of the present invention is characterized in that each of the dummy files permits writing from a predetermined application.

The third aspect of the present invention is characterized in that each of the dummy files permits files of a predetermined type to be written in.

The fourth aspect of the present invention is characterized in that the trailing end of each area is always constituted by a dummy block.

The fifth aspect of the present invention is characterized in the leading end and the trailing end of each area are always constituted by dummy blocks.

According to the present invention, by creating a dummy file so as to manage the unused portion within the secured continuous area, the whole part of this area will appear as being used for applications other than that specified to use this area, so that it is possible to inhibit data from being written in.

Further, by obtaining the file size and positional information of the dummy file, it is possible for the application defining the dummy file to readily grasp the size of the unused space in the secured area and its position and easily perform updating and file creation within the area.

When a multiple number of the applications of different manufacturers which all can recognize the dummy file are provided, the secured continuous area is not always consistent in size between the manufacturers. Also in this case, only referring to the dummy file information enables grasp of the unused portion, thus making it possible to provide compatibility between the manufactures.

Since the partitioning function as a function based on the logical filesystem is not used, it is possible to change the area size by merely updating the dummy file only, which is a simpler procedure compared to the case where the size, etc. of partitions are altered. When it is necessary to know the range of the secured continuous area, the continuous area can be managed by arranging the logical block or blocks of the dummy file at the trailing end or both the leading and trailing ends of the continuous area as required, whereby it is possible to readily grasp the range of the continuous area being managed.

### Brief description of the drawings

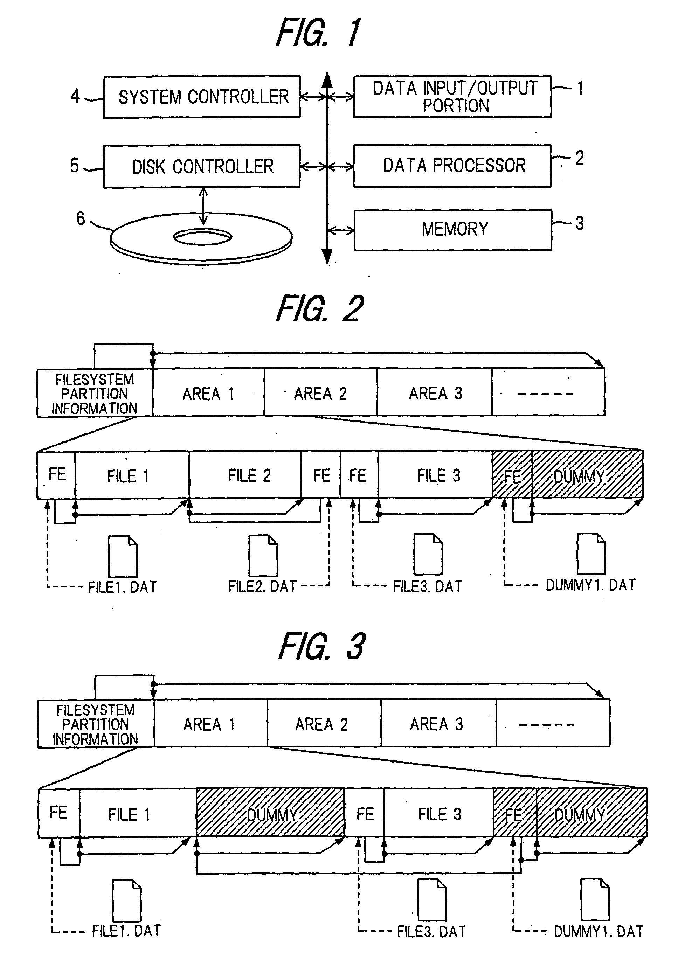

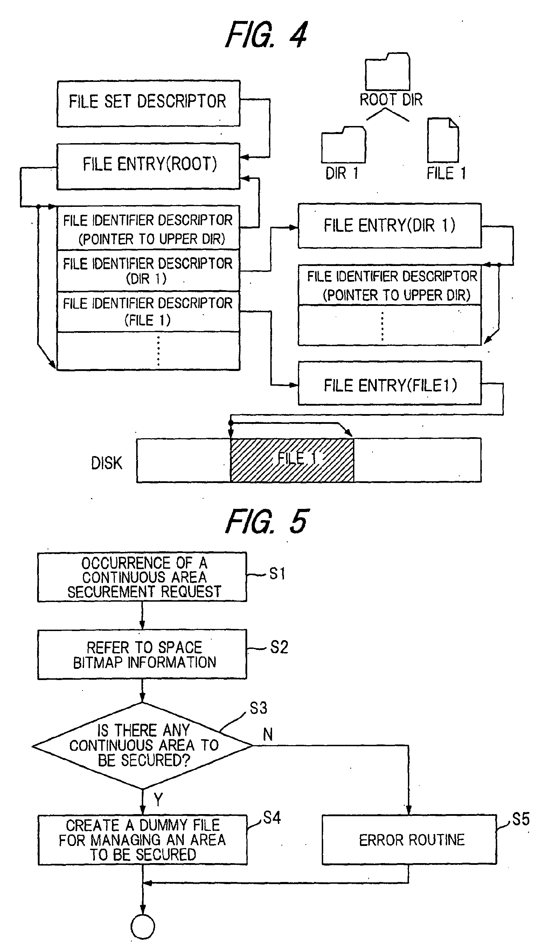

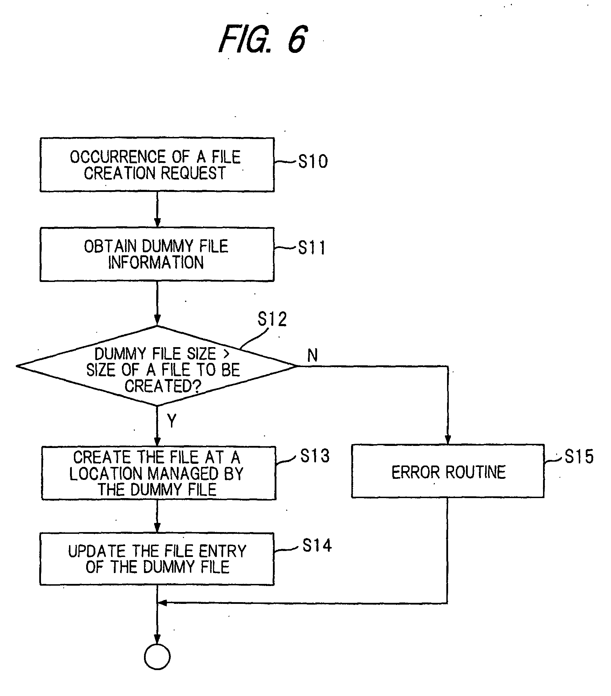

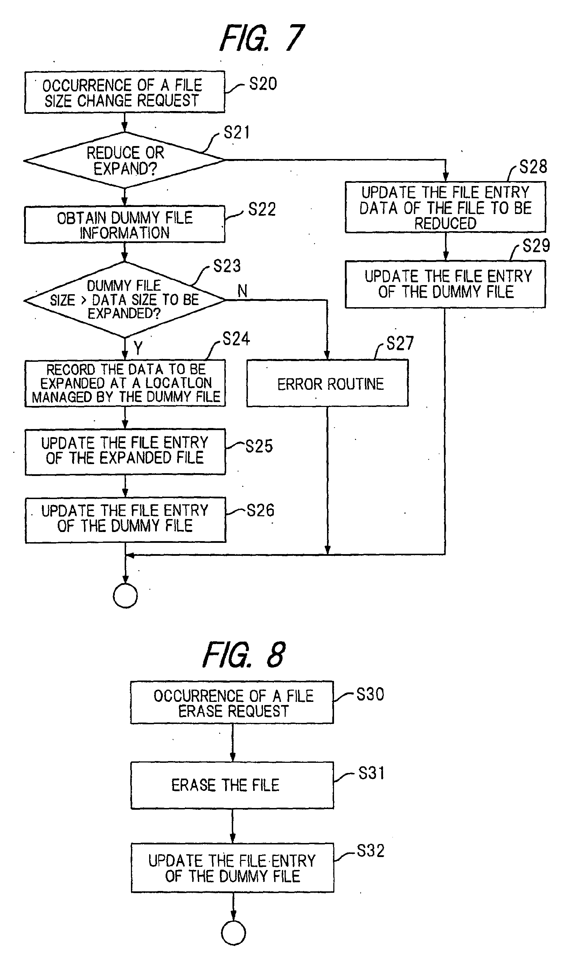

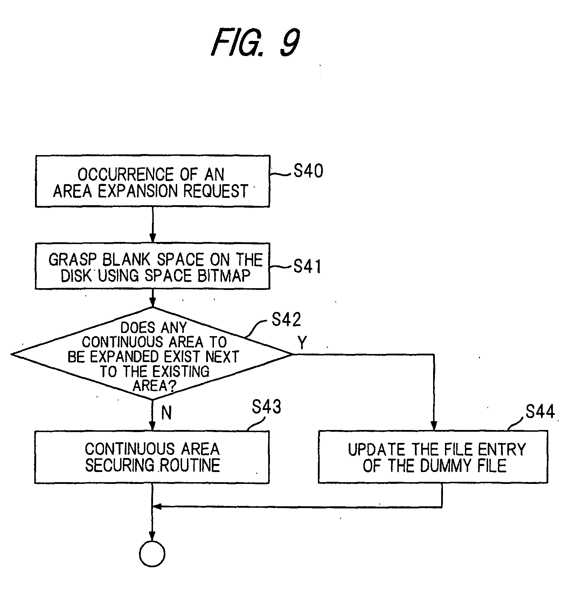

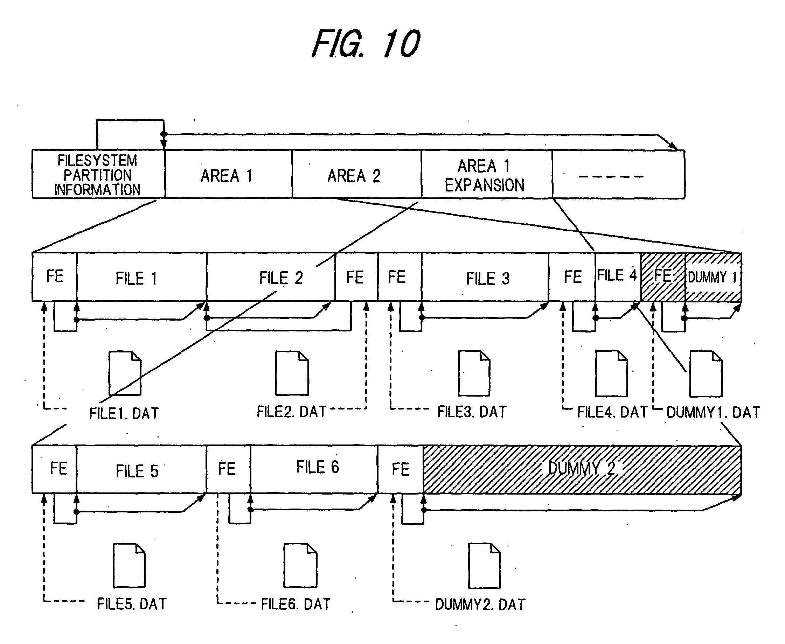

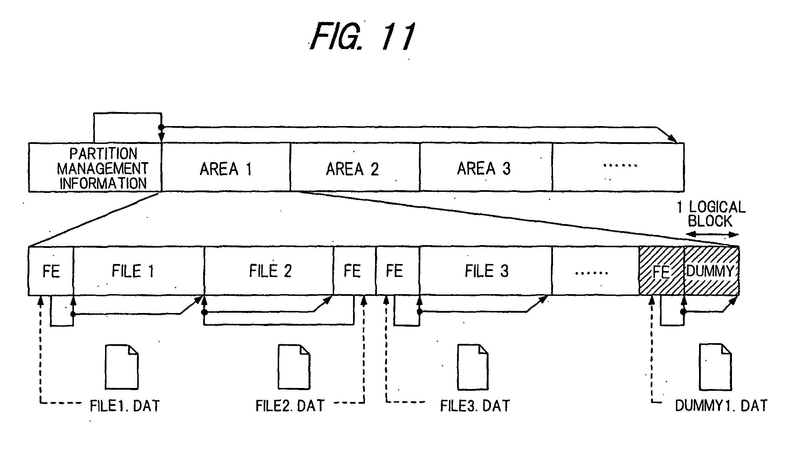

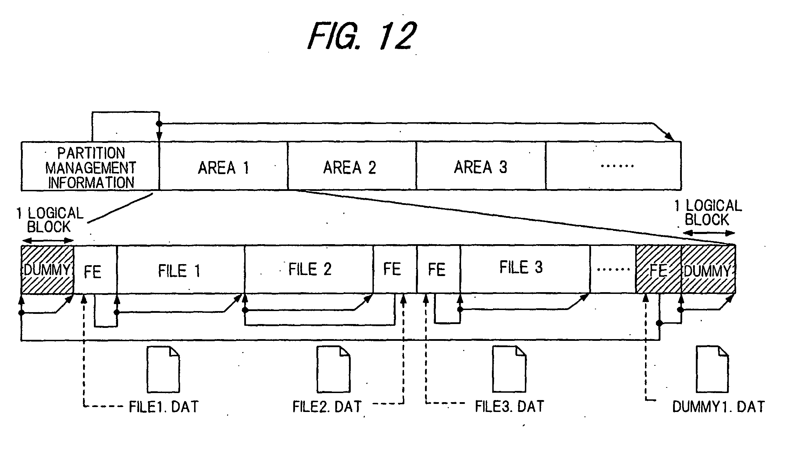

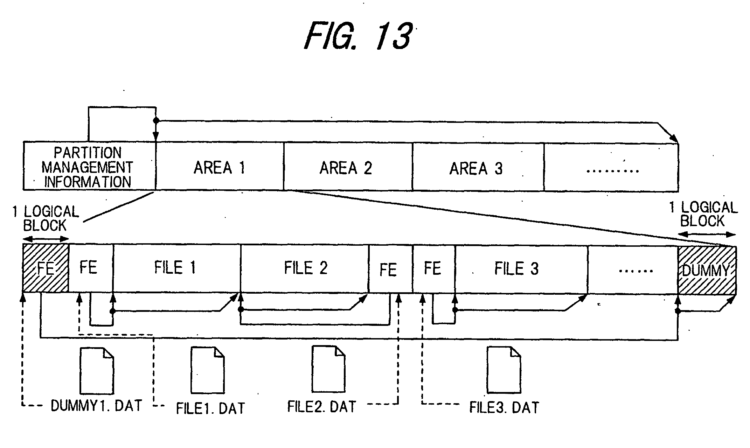

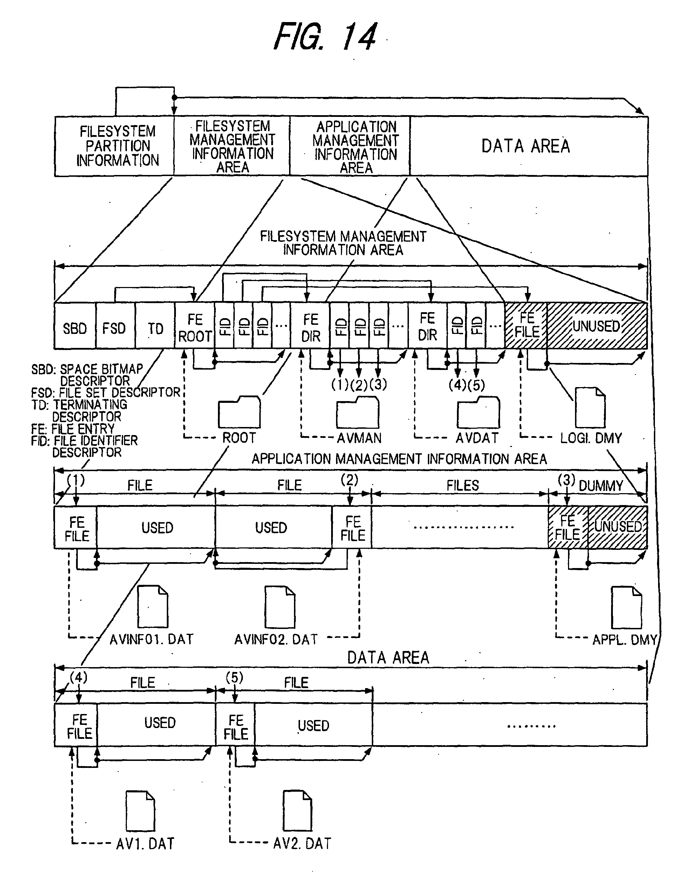

Fig.1 is a block diagram showing the configuration of a disk device as one embodiment of the present invention; Fig.2 is an illustrative view of the embodiment of an area management method of the present invention, showing the way a dummy file is used to secure an area; Fig.3 is an illustrative view of the embodiment of an area management method of the present invention, showing the arrangement of the dummy file when a file is erased; Fig.4 is an illustrative view of the embodiment of an area management method of the present invention, showing the relationships of UDF management information; Fig.5 is a flowchart showing the procedures for securing a continuous area in the mode of an area management method of the present invention; Fig.6 is a flowchart showing the procedures of creating a file within a continuous area secured in the embodiment of an area management method of the present invention; Fig.7 is a flowchart showing the flow of operations when update accompanied with size change of the file secured within the continuous area is made in the embodiment of an area management method of the present invention; Fig.8 is a flowchart showing the flow of operations when the file in the secured continuous area is erased in the embodiment of an area management method of the present invention; Fig.9 is a flowchart showing the flow of operations when the secured continuous area is expanded in the embodiment of an area management method of the present invention; Fig.10 is an illustrative view of the embodiment of an area management method of the present invention, showing an example when the secured continuous area is expanded; Fig.11 is an illustrative view of the embodiment of an area management method of the present invention, showing the way the dummy file in the area necessarily manages the last logical block; Fig.12 is an illustrative view of the embodiment of an area management method of the present invention, showing the way the dummy file in the area necessarily manages the first and last logical blocks; Fig.13 is an illustrative view of the embodiment of an area management method of the present invention, showing the way the dummy file in the area necessarily manages the last logical block and the file entry of the dummy file is arranged at the first logical block; Fig.14 is an illustrative view showing a practical application example, in the embodiment of an area management method of the present invention; Fig.15 is an illustrative view showing the directory hierarchy of the example of Fig. 12 in the embodiment of an area management method of the present invention; Fig.16 is an illustrative view showing the prior art method of securing areas by partitioning; Fig.17 is an illustrative view showing the prior art method of area securement by the file that records positional information as to the areas; and Fig.18 is an illustrative view showing the prior art method of area securement using unit dummy files.

### Best Mode for Carrying Out the Invention

The embodiment of an area management method of the present invention will hereinbelow be described in detail with reference to the drawings. In the present embodiment, the disk devices are assumed to be a hand-held video camera and video deck which use a disk aiming at AV recording and reproduction, an external storage device connected to a PC and the like. The disk medium is preferably of a removable type but may be of a mounted type such as a hard disk. For description convenience, the logical filesystem used for the disk is assumed to be based on the UDF(Universal Disk Format) as the standard of the OSTA(Optical Storage Technology Association), but other generalized logical filesystems can be used.

Fig.1 shows the configuration of a typical disk device. A data input/output portion 1 inputs video signals from a camera etc., and outputs data to be reproduced to a monitor or the like. A data processor 2 is a processing portion which performs signal processings such as-encoding and decoding MPEG codes. The processed data is stored in a memory 3. When data is recorded, a disk controller 5 controls a disk 6 so that data can be recorded at a target position on the disk. When the data is reproduced, the controller controls disk 6 so that data is read out from a target position on the disk and stored into memory 3. Each processing portion is controlled by a system controller 4.

In such a disk device, when the disk needs to be divided into multiple areas and managed, the partitioning function based on the logical filesystem is usually used. However, as stated above, once the disk is divided into partitions, it is difficult to change the partitions in size or combine one partition with another to create an enlarged one. Since in this embodiment, area division is not performed by the partitioning function, one partition is formed so as to manage the entire user area of the disk as shown in Fig.2. Areas for recording specified types of information are defined within the created partition. Since the partitioning function is not used and since the UDF as one of general purpose filesystems is used, there exists no management information which manages multiple areas within one partition at the logical filesystem level. Here, important is the fact that there is a possibility of one disk being used based on multiple platforms. For example, there is a possibility that a disk which has been recorded for AV usage might be accessed from a drive of a PC. Therefore, it is not good enough if area securement is performed based only on the information that can be understood only by a particular application such as an AV application. In other words, defining an area for recording a particular type of information not only means management of the recording areas in accordance with the types of data of AV usage but also limiting data to be written into the secured area even if an access is made from a PC application or the like. In order to achieve this, the secured area must look as if it had data already recorded and were being occupied, from the viewpoint of the logical filesystem.

For this purpose, in the present invention, in order to secure an arbitrary number of continuous areas for recording particular types of information, a dummy file is created to manage the unused portion where no data is recorded in the area. That is, the unused portion in the area is made to show up as if data on the disk managed by the dummy file had been written therein.

In the UDF, there are management information at the volume level and management information at the filesystem level. Here, the management information at the filesystem level. which is concerned herein, will be briefly described. Within the partition defined by the management information at the volume level, the space bitmap descriptor for managing the blank space, the file set descriptor including the basic information of the directory structure in the partition and the pointer information to the file entry that manages the root directory, the terminating descriptor representing that the file set descriptor terminates and the file entry of the root directory are recorded basically as the management information at the filesystem level.

As the space bitmap descriptor, one bit is allotted to every logical block managed in the partition so that whether each logical block is used or not is indicated by the value of the bit data, either 0 or 1. Here, the logical block is the smallest accessible unit in the filesystem and each logical block within the UDF partition is allotted with a logical block number in ascending order.

Once the directory is defined, the file entry that manages the directory will manage the files included in the directory and the recording position of the set of file identifier descriptors corresponding to the directory. The file identifier descriptor holds address information at which the name of a file or directory and the file entry corresponding to attribute data are recorded. The file entry manages the attribute data such as date, etc., and the positional information on the disk of the data managed by this file (file entry) or if it is a directory, the positional information at which the directory information (in the case of a file' identifier descriptor) is recorded. In this way, it is possible to grasp the directory hierarchy by tracking the file entry and file identifier descriptor. These pieces of information are the management information of the UDF filesystem and usually used by the filesystem driver only so that they cannot be usually seen by the user. Fig.4 shows the relationship between file entries and file identifier descriptors for representing the directory hierarchy in the UDF.

As an example of area securement using a dummy file, Fig.2 shows the way areas 1, 2 and 3 are defined as continuous areas for recording an arbitrary number of pieces of information of a particular type and files, FILE1.DAT, FILE2.DAT and FILE3.DAT are recorded in continuous area 2. In an actual disk, the FE(file entry) as the UDF management information corresponding to FILE1.DAT and the data itself or file 1 are recorded. In this example, the file identifier descriptor including the pointer information to FE (file entry) as the file management information is not illustrated assuming that it is recorded in area 1, for example.

The positional information on the disk is managed by the set of allocation descriptors each indicating the starting logical block number and the number of logical blocks. That is, when the data managed by a single file (file entry) has been recorded continuously, the positional information of a file is managed by one allocation descriptor. When the data has been recorded in separate two parts, the positional information of the file is managed by two allocation descriptors.

Similarly to FILE1.DAT, FEs(file entries) and their actual data corresponding to FILE2.DAT and FILE3.DAT are recorded in the secured continuous area. At this stage, a dummy file DUMMY1.DAT is created for the unused part in which no data is recorded within the secured continuous area. That is, dummy file DUMMY1.DAT is formed as if data were written in the unused area. This dummy file is managed by the allocation descriptor of the FE(file entry). The space bitmap descriptors which, as the UDF filesystem management information, manage the blank space, in the part managed by dummy file DUMMY1.DAT are treated as being used.

During the use process, if, for example, FILE2.DAT in Fig.3 is erased, the area in which the FE(file entry) and data corresponding to FILE2.DAT was recorded is indicated as being unused by their space bitmap descriptors and becomes set free. However, in the present invention, the portion where the data was erased will not be set free but is treated as being managed by the aforementioned dummy file DUMMY1.DAT, as shown in the drawing. Upon this, the allocation descriptor in the FE(file entry) of DUMMY1.DAT is updated so that DUMMY1.DAT is made up of two separated parts.

When a dummy file is created, the name of the dummy file should be defined as being understandable by the driver of the filesystem which uses the secured continuous area. In the example of the drawing, the dummy file in the secured continuous area is defined as DUMMY1.DAT. This DUMMY1.DAT is recognized as a blank space from the viewpoint of the filesystem driver corresponding to the present invention.

Thus, by always creating a dummy file so as to control the unused portion in the secured continuous area, the whole of this area will be regarded as being used by applications other than that specified to use this area, so that no data will be written in. Further, this configuration not only inhibits data writing from other applications, but also makes it possible for the filesystem driver defining this dummy file to obtain the information as to the dummy file and thereby easily grasp the size and position of the unused portion in the secured area. For example, the size of the unused portion can be known by referring to the file size of the dummy file, and the positional information can be easily obtained by referring to the allocation descriptor in the FE(file entry) of the dummy file. In short, the dummy file itself represents the unused portion in the secured area.

When a multiple number of the filesystem drivers of different manufacturers which all can recognize the dummy 'file are provided, the secured continuous area is not always consistent in size between the.manufacturers. Also in this case, only referring to the dummy file information enables grasp of the unused portion in the secured area, so that it is possible to provide compatibility between the manufactures without limiting the area size. Further, the area size can be grasped, if required, from the information as to the dummy file and files to be recorded within the area.

Referring now to the flowchart shown in Fig.5, the procedures of securing the continuous area of a specified size for recording anew information of a particular type will be described in detail. When a request for securing a continuous area occurs at Step S1, blank spaces on the disk are searched and grasped by referring the space bitmap information of the management information of the UDF logical filesystem at Step S2. When a needed continuous area cannot be secured at any place on the disk at Step S3, an error routine is made at Step S5 and the operation is ended. At Step S3, when the needed continuous area can be secured at a site on the disk, a dummy file is created at Step S4 in such a manner that it manages the continuous area to be secured, and the operation is ended. Specifically, the pointer information of the dummy file to the file entry, i.e., the file identifier descriptor is added to the directory information of the directory on which the dummy file is created and the file entry for managing the positional information and attribute information of the data of the dummy file is recorded. At this time, the starting logical block number and the number of logical blocks as the positional information of the secured area are recorded in the allocation descriptor in the file entry.

Next, the procedures when a file creation request arises will be described. When a file creation request has occurred, it is judged as to which area the file can be written in. For example, there are divided areas, namely, area 1, area 2, area 3 ···, as shown in Fig.2. In this case, it is assumed that when a certain AV application made a write request of a file, the file is adapted to be written into area 1. This determination is made, for example, by instructing the filesystem driver to cause the AV application to write into the position of DUMMY1.DAT. Other applications, for example, PC applications other than the AV application will not write over DUMMY1.DAT but will write into the other areas.

It is also possible to make control such that video data, for example, is written on DUMMY1.DAT and audio data is written on DUMMY2.DAT, by defining write areas (corresponding to dummy data) in accordance with the usage purposes of files.

In one word, it becomes possible to write a file of a predetermined type into a predetermined area.

Referring next to the flowchart shown in Fig.6, the procedures when a file is created inside the area secured by the dummy file after the determination of the write area will be described in detail.

When a file creation request occurs at Step S10, dummy file information is obtained at Step S11. Specifically, referring to a file entry corresponding to a file defined as a dummy file based on its file name, the file size and positional information as to the dummy file is obtained from that information. At Step S12, it is determined whether the file size of the dummy file, or the blank size in the secured area is greater than the size of the file to be created. When the size of the dummy file is smaller than that of the file to be created, there is no space to create the file in the secured area so that an error routine is performed at Step S15 and the operation is ended. At Step S12, when the size of the dummy file is greater than that of the file to be created, the file can be created in the secured area, so that the file is created in the blank portion which is managed by the dummy file, at Step S13.

Specifically, the pointer information to the file entry for managing the file, i.e., the file identifier descriptor is added to the directory information of the directory to which the file to be created belongs, and the file entry for managing the positional information and attribute information of the data of the file is recorded. At Step S14, the file entry of the dummy file is updated to end the operation. For this, updating is performed by deducting the part allotted for the new file from the allocation descriptor information in the file entry.

Next, referring to the flowchart shown in Fig.7, the procedures to be effected when a file belonging to the area secured by the dummy file is updated with change in size.

When a request for updating a file with change in file size occurs at Step S20, it is determined whether the size of the file becomes larger or smaller, at Step S21. When the file is reduced in size, the allocation descriptor in the file entry of the file to be reduced is updated so as to manage the reduced data, at Step S28. At Step S29, updating is performed by adding the amount by which the file is reduced to the allocation descriptor of the file entry of the dummy file. When the file is expanded in size, the information on the dummy file is gained at Step S22 so that the blank part within the secured area is grasped. At Step S23, the size of the dummy file or the size of the unused space in the secured area is compared with the data size of the newly expanded file. When the dummy file is greater in size, or when the blank part in the secured area is large enough, the enlarged data is recorded into the unused space being managed by the dummy file at Step S24. At Step S25, the allocation descriptor of the file entry of the expanded file is updated. At Step S26, the allocation descriptor of the file entry of the dummy file is updated to end the operation. At Step S23, if the enlarged data is larger in size than the dummy file or when there is not a blank space large enough to allow for enlargement, the error routine is performed at Step S27 to end the operation.

Detailed referring to the flowchart shown in Fig.8 is a case where a file belonging to the area managed by the dummy file is erased. At Step S30, when a request for erasing a file occurs, erasure of the file is performed at Step S31. Specifically, from the directory information of the directory including the file to be erased, the corresponding file identifier descriptor is erased. At Step S32, the file entry of the dummy file is updated to end the operation. In effect, the allocation descriptor of the dummy file is updated so that the dummy file will manage the portion where the erased' file was recorded.

Referring to the flowchart shown in Fig.9, detailed description will be made on the procedures in the case where the area size needs to be enlarged when the area secured by the dummy file is insufficient.

When a request for area enlargement occurs at Step S40, the blank space on the disk is grasped by the space bitmap at Step S41. It is determined at Step S42 whether a continuous area having a space equivalent to the needed expansion exists adjacent to the are to be expanded. If there is, the file entry of the dummy file is updated at Step S44 in such a manner that the updated file will include the expanded area. If there is no adjoining continuous area having a space equivalent to the needed expansion exists, the continuous area securing process shown in Fig. 9 is carried out to end the operation. In this case, the expanded area is not continuous to the existing area. If the expanded area should be continuous, the operation may be ended with an error routine without performing the continuous area securing process at Step S43. Fig.10 shows an example in that a certain area is expanded. In this example, FILE1.DAT, FILE2.DAT and FILE3.DAT were recorded in area 1, leaving no blank space and a separate continuous area on the disk was secured after a vain attempt of expansion of the area using the adjoining area because the adjacent area 2 was already occupied. The blank space in area 1 is managed by the dummy file having a file name of DUMMY1.DAT while the blank space in the expanded area of area 1 is managed by the dummy file with a file name of DUMMY2.DAT. Here, since the file name is defined, it is possible to grasp from the existence of DUMMY2.DAT the fact that an expanded, continuous area exists at a separated position on the disk. Further, when the existing continuous area needs to be expanded but continuous expansion is impossible because the adjacent area is being occupied, the data adjacent may be displaced to another place on the disk so as to make the area empty and perform continuous expansion.

In this way, since the partitioning function as a function of the logical filesystem is not used, it is possible to change the area size by updating the dummy file only, which is a far simpler procedure compared to the case where the size, etc. of partitions are altered.

To manage the blank space in the defined continuous area with a dummy file, it is also possible to add a requirement that the last logical block in the continuous area must be managed by the dummy file as shown in Fig.11. That is, one logical block at the last end in the continuous area is always reserved as the space to be managed by the dummy file. Therefore, one logical block and one logical block for recording the file entry managing the dummy file, or two more logical blocks in total should be reserved other than the size of a desired continuous'area. Therefore, of the allocation descriptor in the file entry managing the dummy file DUMMY1.DAT, the greatest logical block number will indicate the trailing end of the secured continuous area. With this configuration, it is possible to prevent the boundary of the continuous area from becoming unclear when a data file' is recorded to the last of the continuous area and make it easy to grasp the boundary of the continuous area.

When files to be recorded in the secured continuous area have been determined, it is possible to grasp the range of the continuous area from the allocation descriptors of the file entries and the information of the dummy file. However, if the names etc. of the files recorded in the continuous area have been undetermined, it is impossible to judge to which continuous area the recorded data belongs from the file name. Therefore, in this case, it is possible to grasp the blank space from the dummy file but it is impossible to grasp the range of the secured continuous area. Therefore, to deal with such a case, it is also possible to add a requirement that the first and the last logical blocks in the continuous area must be managed by the dummy file as shown in Fig.12. That is, one logical block at the first and last end in the continuous area is always reserved as the space to be managed by the dummy file. Therefore, two logical blocks and one logical block for recording the file entry managing the dummy file, or three more logical blocks in total should be reserved other than the size of a desired continuous area.

Alternatively, as shown in Fig.13, it is also possible to impose a requirement that the first of the continuous area to be secured should be the file entry managing the dummy file and one logical block at the trailing end should be the space to be managed by the dummy file.

By this configuration, the smallest logical block number in the allocation descriptor in the file entry managing the dummy file DUMMY1.DAT, or the number of the logical block where the file entry itself of the dummy file is recorded will indicate the starting position of the secured continuous area while the largest logical block number will indicate the rear end of the continuous area. Thus, this makes it easy to grasp the range of the continuous area being managed.

Referring next to Fig.14 a practical application example of the present invention will be described. This drawing shows an example of area management for AV usage to record AV data. First, the whole area is managed by dividing it into a file system management information area, an application management information area and a data area. Recorded in the filesystem management information area are the basic management information based on the UDF filesystem including the space bitmap descriptor(SBD), file set descriptor(FSD) and terminating descriptor(TD), the file entry(FE) of the directory defined by the AV application, and file identifier descriptors (FID), as the pointer information to the file entries managing the files and directories defined in the directory. In the example of this drawing, configuration of the ROOT directory, AVMAN directory for recording the management information of AV data, the file entry for managing the AVDAT directory for recording AV data, sets of file identifier descriptors(FID) of the files defined in different directories are recorded. A dummy file LOGI.DMY manages the unused portion in the filesystem management information area.

The application management information area is the area in which the management information of the AV application such as the management information for reproducing AV data is recorded. In this area, AVINF01.DAT and AVINF02.DAT as the management information of AV data, are recorded. The file entry and the data entity corresponding to each are recorded on the disk. Similar to the filesystemmanagement information area, dummy file APPL.DMY manages the unused portion in the application management information area. When accessing the thus configured disk, the user will see the directory hierarchy shown in Fig.15.

In the data area, AV data, namely, AV1.DAT and AV2.DAT are recorded. The file entry and the data entity corresponding to each are recorded on the disk. In the example of this drawing, though, as to the data area, no area reservation in the data area using a dummy file is made, it is possible to define a dummy file as necessary to secure an area.

In this way, the unused portion in the filesystem management information area is managed by the dummy file LOGI.DMY. The unused portion in the application management information area is managed by the dummy file APPL.DMY. For the AV application using these areas, these dummy files are handled as managing the blank portions in the associated areas. For example, when the disk thus conditioned is accessed from a disk drive connected to a PC, it looks as if files were recorded in the filesystem management information area and in the application management information area leaving no blank spaces. This is equivalent to the fact that these areas are secured. Therefore, no data will be written into these areas.

Since it causes a serious problem if the directories used in the AV application, the management information as to AV data and the like are erased from a PC application, the attributes of these files and directories may be designated as being write protected. That is, the PC application will only be able to write into the blank spaces in the data area. Not to mention, it is seriously inconvenient if the dummy. file itself is erased, so that it is possible to set up file attributes that keep any data from being written in. The dummy files may be set up with 'hidden' file attributes in order to keep its file name from appearing on the PC application. If a dummy file was erased accidentally, it is possible to reconstruct the dummy file based on the logical filesystem management information as to the currently defined files and directories and the information as to the space bitmap descriptor managing the blank space.

### Industrial Applicability

As has been described heretofore, the file management method according to the present invention, since it is possible to write data other than the desired data into the predetermined area without performing partitioning based on the logical filesystem, the method can be applied to multipurpose disk media used in common by different platforms such as for PC usage and AV usage.

## Claims

1. A file management method for a recording device having a recording medium and a recording control means for managing data input and output with resect to the recording medium, wherein at least one area is secured in the recording medium and the blank space in each area is managed by a dummy file, the method **characterized in that**, when a file is written into the area, the file is written over the dummy file in the area and the size of the dummy file is updated to the size of the blank space in the area.

2. The file management method according to Claim 1, wherein each of the dummy files permits writing from a predetermined application.

3. The file management method according to Claim 1 or 2, wherein each of the dummy files permits files of a predetermined type to be written in.

4. The file management method according to any of Claims 1 through 3, wherein the trailing end of each area is always constituted by a dummy block.

5. The file management method according to any of Claims 1 through 4, wherein the leading end and the trailing end of each area are always constituted by dummy blocks.
